# EUROPEAN PATENT APPLICATION

(11) **EP 3 716 637 A1**
(43) Date of publication of application: **30.09.2020**
(21) Application number: 18881973.4
(22) Date of filing: 06.02.2018
(51) Int. Cl.: H04N 21/443, H04N 5/63, G06F 1/32

(54) **TELEVISION STANDBY AND STARTUP METHOD, TELEVISION AND COMPUTER-READABLE STORAGE MEDIUM**

(30) Priority: 21.11.2017 CN 201711172966
(71) Applicant: Shenzhen Skyworth-RGB Electronic Co., Ltd., Shenzhen, Guangdong 518057 (CN)
(72) Inventor: FU, Huadong, Shenzhen Guangdong 518057 (CN)
(74) Representative: Osterhoff, Utz
(86) International application number: PCT/CN2018/075338
(87) International publication number: WO 2019/100593

(57) **Abstract**

Disclosed are a method of standing-by and starting-up television, a television and a computer-readable storage medium. The method of standing-by and starting-up television includes: in response to receiving a STR standby command, obtaining information of a hardware operating status of the television, and obtaining configuration information of a memory, wherein the memory is preset in a self-update mode; storing the information of the hardware operating status of the television in the memory, and storing the configuration information of the memory in a preset single-chip microcomputer; releasing hardware resource being used by the television and freezing a current process; controlling to power-off of hardware except the memory and the single-chip microcomputer, and allowing the television to enter a STR standby state. The power supply needs to be maintained for the memory and the single-chip microcomputer within the present disclosure, which reduces the overall power consumption of the television when it is in the STR standby mode, and enables the television to be in line with energy conservation and environmental protection.

## Description

### TECHNICAL FIELD

The present disclosure relates to the field of television, and in particular to a method of standing-by and starting-up a television, a television, and a computer-readable storage medium.

### BACKGROUND

In the start-up of the related televisions, the system programs have to be completely loaded into the memory before the hardware is initialized. The programs for application operating system is afterwards initiated in order to take further operations. The system program includes programs related to hardware initialization and programs for application operating system. As the system program increases in size, the time for loading and hardware initialization has been increasingly longer, which prolongs the entire start-up time for the television. User experience has thus been negatively affected.

For above, STR (Suspend to RAM) standby mode, also named as RAM standby mode has been effectively introduced into the television. This STR standby mode saves more than 20 seconds in regards to the start-up time compared to the conventional mode. However, the STR standby mode needs to keep the RAM (random access memory) running with the CPU (Central Processing Unit) and MCU (Microcontroller Unit) asleep during the standby. The hardware including RAM, CPU, and MCU are still power-consuming, resulting in extra power consumption during television standby in such mode.

### SUMMARY

The present disclosure is to provide a method of standing-by and starting-up television, a television, and a computer-readable storage medium, attempting to resolve the problem of the extra power consumption induced by the hardware such as RAM, CPU, and MCU being still power-consuming once the television is in STR standby mode.

In order to achieve the aforementioned object, the present disclosure provides a method of standing-by and starting-up television, which includes:
in response to receiving a STR standby command, obtaining information of a hardware operating status of the television, and obtaining configuration information of a memory, in which the memory is preset in a self-update mode;
storing the information of the hardware operating status of the television in the memory, and storing the configuration information of the memory in a preset single-chip microcomputer;
releasing hardware resource being used by the television and freeze a current process;
controlling to power-off of hardware except the memory and the single-chip microcomputer, and allowing the television to enter a STR standby state.

In an embodiment, the operation of "in response to receiving a STR standby command, obtaining information of a hardware operating status of the television, and obtaining configuration information of a memory", may include:
in response to receiving the STR standby command, obtaining a current STR standby count by adding one count onto a variable corresponding to a historical STR standby count;
determining whether the current STR standby count is greater than a preset threshold;
in response that the current STR standby count fails to be greater than the preset threshold, obtaining the information of the hardware operating status of the television, and obtaining the configuration information of the memory preset in the self-update mode.

In an embodiment, after the operation "determining whether the current STR standby count is greater than a preset threshold", the method may include:
in response that the current STR standby count is greater than the preset threshold, setting the current STR standby count to zero;
clearing historical information of the hardware operating status stored in the memory;
controlling the television to enter into a conventional standby mode.

In an embodiment, the operation of "obtaining information of the hardware operating status of the television", may includes:
obtaining the information of the hardware status of other devices currently used by the television, in which the other devices include at least: input/output devices, network devices, and external storage devices.

Preferably, the method of standing-by and starting-up the television further includes:
in response to receiving a wake-up command to the television, controlling a central processor to be powered on and started-up, and obtaining the configuration information of the memory from the preset single-chip microcomputer, to allow the central processor to configure the memory according to the configuration information;
obtaining the information of the hardware operating status from the memory, and resuming a corresponding hardware status to wake-up the television according to the information of the hardware operating status.

In an embodiment, the operation of "in response to receiving a command of waking-up the television, controlling a central processor to be powered on and started-up, and obtaining the configuration information of the memory from the preset single-chip microcomputer, to allow the central processor to configure the memory according to the configuration information", includes:
in response to receiving the wake-up command, determining whether the television is in the STR standby state;
in response that the television is in the STR standby state, controlling the central processor to be powered on, and obtaining the configuration information of the memory from the preset single-chip microcomputer, to allow the central processor to configure the memory according to the configuration information.

In an embodiment, the operation of "in response to receiving the wake-up command, determining whether the television is in the STR standby state", may include:
in response that the standby state of the television is not the STR standby state, controlling the television to start in a conventional start-up mode.

In addition, in order to achieve the aforementioned object, the present application further provides a television which further includes a processor, and a memory storing one or more programs for standing-by and starting-up the television. In which, the one or more programs includes operations that, when executed by the processor, cause the television to implement the operations of the method described all above.

In addition, in order to achieve the aforementioned object, the present disclosure also provides a computer-readable storage medium which stores one or more programs for standing-by and starting-up the television, and the one or more programs includes operations that, when executed by a processor, cause the computer-readable storage medium to implement the methods of standing-by and starting-up television as described above.

In the present disclosure, when the STR standby command is received, the information of the hardware operating status of the television and the configuration information of the memory in the self-update mode are acquired, the information of the hardware operating status is stored in the memory, and the configuration information is stored in the preset single-chip microcomputer, the hardware resources that the television is using are released and the process are frozen, the hardware are controlled to be powered-off except the memory and the single chip, to allow the television to enter the STR standby state. The power supply needs to be maintained for the memory and the single-chip microcomputer within the present disclosure, which reduces the overall power consumption of the television when it is in the STR standby mode, and enables the television to be in line with energy conservation and environmental protection.

### BRIEF DESCRIPTION OF THE DRAWINGS

FIG. 1 is a schematic diagram of a hardware operating environment of a television according to an embodiment of the present disclosure;
FIG. 2 is a schematic flowchart of a method of standing-by and starting-up the television according to a first embodiment of the present disclosure;
FIG. 3 is a schematic flowchart of a method of standing-by and starting-up the television according to a second embodiment of the present disclosure;
FIG. 4 is a schematic diagram of the overall flowchart of the STR standby and starting-up system according to an embodiment of the present disclosure.

The implementation, functional features and advantages of the present application will be further described with reference to the accompanying drawings with the embodiments.

### DETAILED DESCRIPTION OF THE EMBODIMENTS

It should be understood that the specific embodiments described herein are only for the purpose of explaining the present application and are not intended to limit the present application.

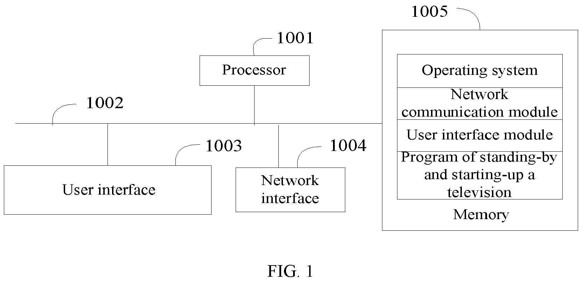

Referring to Fig. 1, which is a schematic diagram of hardware operating system involved in an embodiment of the present application.

As shown in Fig. 1, the television may include a processor 1001, such as a CPU, a network interface 1004, a user interface 1003, a memory 1005, and a communication bus 1002, and a single-chip microcomputer 106. In an embodiment, the communication bus 1002 is configured to implement connection and communication between these components. The user interface 1003 may include a display, an input unit such as a keyboard, and the optional user interface 1003 may further include a standard wired interface and a wireless interface. The network interface 1004 may optionally include a standard wired interface and a wireless interface (such as a WI-FI interface). The memory 1005 may be a high speed RAM memory or a non-volatile memory such as a disk memory. The memory 1005 may alternatively be a storage device independent of the aforementioned processor 1001,

It would be understood by those skilled in the art that the structure shown in Fig. 1 does not constitute a limitation to the television, which may include more or fewer components than shown, or some components may be combined, or different components arranged.

As shown in FIG. 1, the memory 1005, which is a computer storage medium, may include an operating system, a network communication module, a user interface module, and a program for standing-by and starting-up the television.

Shown in FIG. 1, the network interface 1004 is mainly configured to connect with a back-end server and perform data communication with the back-end server. The user interface 1003 is mainly configured to connect the client (user end) and perform data communication with the client end; while the processor 1001 can be configured to call the program for standing-by and starting-up the television stored in the memory 1005 and execute the following operations:

in response to receiving a STR standby command, obtaining information of a hardware operating status of the television, and obtaining configuration information of a memory, in which the memory is preset in a self-update mode;
storing the information of the hardware operating status of the television in the memory, and storing the configuration information of the memory in a preset single-chip microcomputer;
releasing hardware resource being used by the television and freezing a current process;
controlling to power-off of hardware except the memory and the single-chip microcomputer, and allowing the television to enter a STR standby state.

Further, when the STR standby command is received, the operation of "obtain information of a hardware operating status of the television, and obtain configuration information of a memory, in which the memory is preset in a self-update mode", may further include:
in response to receiving the STR standby command, obtaining a current STR standby count by adding one count onto a variable corresponding to a historical STR standby count;
determining whether the current STR standby count is greater than a preset threshold;
in response that the current STR standby count fails to be greater than the preset threshold, obtaining the information of the hardware operating status of the television, and obtaining the configuration information of the memory preset in the self-update mode.

In an embodiment, after the operation "determining whether the current STR standby count is greater than a preset threshold", the method may include:
in response that the current STR standby count is greater than the preset threshold, setting the current STR standby count to zero;
clearing historical information of the hardware operating status stored in the memory;
controlling the television to enter into a conventional standby mode.

Further, the operation of "obtaining information of the hardware operating status of the television" may includes:
obtaining information of the hardware status of other devices currently used by the television, and the other devices include at least: input/output devices, network devices, and external storage devices.

Further, the processor 1001 can call the program for standing-by and starting-up the television stored in the memory 1005, and also implement the following operations:
in response to receiving a wake-up command to the television, controlling a central processor to be powered on and started-up, and obtaining the configuration information of the memory from the preset single-chip microcomputer, to allow the central processor to configure the memory according to the configuration information;
obtaining the information of the hardware operating status from the memory, and resuming a corresponding hardware status to wake-up the television according to the information of the hardware operating status.

In some the embodiments, the operations of "in response to receiving a wake-up command to the television, control a central processor to be powered on and started-up, and obtain the configuration information of the memory from the preset single-chip microcomputer, to allow the central processor to configure the memory according to the configuration information", may include:
in response to receiving the wake-up command, determining whether the television is in the STR standby state;
in response that the television is in the STR standby state, controlling the central processor to be powered on, and obtaining the configuration information of the memory from the preset single-chip microcomputer, to allow the central processor to configure the memory according to the configuration information.

Further, the operation of "in response to receiving the wake-up command, determining whether the television is in the STR standby state", may includes:
in response that the standby state of the television is not the STR standby state, controlling the television to start in a conventional start-up mode.

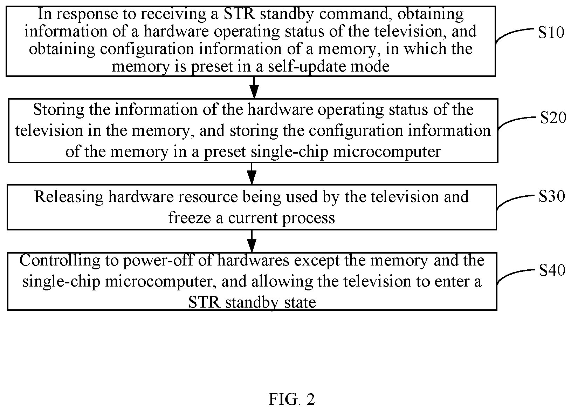

FIG. 2 is referred to, which a schematic flowchart of a method of standing-by and starting-up television according to a first embodiment of the present disclosure.

In some of the embodiment, the method of standing-by and starting-up the television includes:
Operation S10, in response to receiving a STR standby command, obtaining information of a hardware operating status of the television, and obtaining configuration information of a memory, in which the memory is preset in a self-update mode;

In an embodiment, the STR standby command may be issued by the user by operating the remote control. For example, after the user presses the standby button on the remote control, after receiving the key information on the television side, if it is detected that the STR standby command is currently met, the command to initiate the STR standby is triggered.

In an embodiment, obtaining the information of the hardware operating status of the television may be obtaining the identifier of the audio/video channel currently used by the television. Obtaining the information of the hardware operating status of the television may also be obtaining the information of the hardware status of the other devices currently used by the television. In an embodiment, the other devices include at least: input/output devices, network devices, and external storage devices.

In an embodiment, the preset memory is in a self-update state, so that the data stored in the memory will not be lost if the power is on. The memory may be DDR (Double Data Rate synchronous dynamic random access memory). In an embodiment, the configuration information is the configuration information of the memory itself in the current moment.

Operation S20, storing the information of the hardware operating status of the television in the memory, and storing the configuration information of the memory in a preset single-chip microcomputer;

In an embodiment, storing the information of the hardware operating status of the television in the memory may be storing the information of the hardware status of the other devices that are currently used by the television and/or storing the identification information of the audio/video channel currently used by the television in the memory. The configuration information of the memory is stored in a preset single-chip microcomputer.

Operation S30, releasing hardware resource being used by the television and freeze a current process.

In an embodiment, releasing the hardware resources being used by the television and freezing the process may be switching the signal audio/video channel currently used in the television to a preset channel having no input signal. For example, the signal source can be switched to channel X. In the embodiment of the present disclosure, channel X is a channel without any VIDEO and AUDIO. It can also be any application that does not play or does not enter playback. After such a channel is switched to, the AUDIO and VIDEO resources can be released, and the hardware system related to AUDIO and VIDEO are not used. One can power off the AUDIO and VIDEO related hardware interfaces (HDMI channel, USB peripherals, power amplifier, SPDIF (Sony/Philips Digital Interface Format digital audio interface), etc.) during standby. Further, the network interface can be closed, including wired and wireless network.

Operation S40, controlling to power-off of hardware except the memory and the single-chip microcomputer, and allowing the television to enter a STR standby state.

In an embodiment, the memory and the single-chip microcomputer are kept powered on. Since the memory is still powered on and maintains the self-update mode, the memory will keep running after the television is in standby, and no data will be lost. The configuration information of the memory is saved in the single-chip microcomputer to ensure the continuous power of the single-chip microcomputer and put the single-chip microcomputer into a sleep state, which can power off the CPU, MCU (that is, single chip microcomputer), power on the CPU, the CPU configures the memory according to the configuration information (if the configuration information is not stored in the MCU, the CPU needs to initialize the memory after starting the CPU, which will increase the start-up time). The pre-saved hardware operating state is obtained from the memory that does not power down and maintains the self-update mode, so as to quickly resume each hardware to the operating state before standby, thereby increasing the wake-up speed of the television and realizing the fast wake-up of the television.

In the related art, when the television is turned on, it needs to start the CPU, MCU, RAM, etc., and it needs to load the start-up LOGO, start-up animation, and advertisement, etc. Therefore, even for a new television, it takes about 30 seconds to finish a start-up process. If the hardware configuration is not enough, and the hardware self-test and system loading will take even longer. The installed software, system garbage, and software cache would all occupy hardware resources, causing the system to run stuttering, elongating the start-up of the television. As such, the start-up would be slow, and the start-up will take even longer when the television is used for a period of time, even as long as 3 to 5 minutes. In order to improve the start-up speed, the television adds STR (Suspend to RAM, that is, suspend to memory, also known as memory standby mode) standby mode, after the system is shut down or enters the power saving mode, the file data required for restarting is stored in RAM, the recovery time of the system using STR standby mode is short, and it generally takes about ten seconds from start-up to recovery. However, it is necessary to continue to supply power to the CPU and RAM, and the power consumption is large, and when the time from the next start-up is longer, the cumulative power consumption of the STR standby mode will be larger than that of the normal standby.

In an embodiment, when the STR standby command is received, the information of the hardware operating status of the television and the configuration information of the memory in the self-update mode are acquired, the information of the hardware operating status is stored in the memory, and the memory configuration information is stored in the preset single-chip computer, the hardware resources used by the television are released and the process is frozen, the hardware except for the memory and the single-chip computer is controlled to be powered off, and the television enters the STR standby state. With this embodiment, it is only necessary to maintain power supply to the memory and the MCU to maintain the self-update state of the memory. The MCU enters the sleep low power consumption state, which reduces the overall power consumption of the television when it is in STR standby mode, making the television more energy-efficient and environmental friendly.

Further, in an embodiment of the method of standing-by and starting-up the television of the present disclosure, step S10 includes:
in response to receiving the STR standby command, obtaining a current STR standby count by adding one count onto a variable corresponding to a historical STR standby count;
determining whether the current STR standby count is greater than a preset threshold;
in response that the current STR standby count fails to be greater than the preset threshold, obtaining the information of the hardware operating status of the television, and obtaining the configuration information of the memory preset in the self-update mode.

In an embodiment, since the television stores the hardware operating status in the memory during STR standby, the memory will be read and written. Every time the television enters STR standby or wakes up from STR standby, there would be increasing information of the hardware operating status accumulated in the memory before each standby (that is, accumulating historical information regarding the hardware operating status stored in the memory) with the increased numbers of standby. Abnormality then possibly increases at a certain limit when the memory fragments increases. With this regard, when the STR standby command is received, the historical STR standby count is obtained, for example, 3 times, and the number is increased by 1 count, obtaining the current STR standby count being 4. It is detected whether the current STR standby count is greater than a preset threshold. For example, the threshold is set to be 5 (in an embodiment, the threshold is set according to the actual situation, no limit should be set herein). When the current STR standby count is not greater than the preset threshold, the information of the hardware operating status of the television is obtained. the configuration information of the memory which is in a self-update mode is obtained. When the current STR standby count is not greater than a preset threshold, subsequent STR standby operations can be performed.

In an embodiment, when the current STR standby count is not greater than the preset threshold, it means that the memory fragments in the memory are not enough to affect the smooth progress of the STR standby and start-up, so the subsequent STR standby steps are performed. With this embodiment, the stability of the STR standby system is improved.

Further, in an embodiment of the method of standing-by and starting-up the television of the present disclosure, the operation of detecting whether the current STR standby count is greater than a preset threshold includes:
in response that the current STR standby count is greater than the preset threshold, setting the current STR standby count to zero;
clearing historical information of the hardware operating status stored in the memory;
controlling the television to enter into a conventional standby mode.

In an embodiment, if the current STR standby count is 6, and the preset threshold is 5, it indicates that the historical information of the hardware operating status in the memory is currently over stored. If the subsequent operations of STR standby are continued, possibilities would increase in abnormality of the STR standby and start-up of the television. When the current STR standby count is greater than the preset threshold, the current STR standby count is set to zero, and the historical information of the hardware operating status stored in the memory would be cleared. The memory fragments in the memory are cleared. Further, historical configuration information stored in the single-chip microcomputer can also be cleared , and the television can alternatively enter a conventional standby mode. The television will maintain in the conventional mode until it receives the STR standby command again.

In an embodiment, when the current STR standby count is greater than the preset threshold, it means that there are many memory fragments in the memory, which may affect the smooth progress of the STR standby and start-up, so that after the history records stored in the memory are cleared, the next STR standby process is not affected by fragmentation of storage memory. With this embodiment, the stability of the STR standby system is improved.

Further, in an embodiment of the method of standing-by and starting-up the television of the present disclosure, information of the hardware status of a peripheral device currently used by the television is obtained, where the peripheral device includes at least an input/output device, a network device, and an external storage device.

In an embodiment, obtaining the information of the hardware operating status of the television may be obtaining the identifier of the audio/video channel currently used by the television. Obtaining the information of the hardware operating status of the television may also be obtaining the information of the hardware status of the other devices currently used by the television. In an embodiment, the other devices include at least: input/output devices, network devices, and external storage devices.

In an embodiment, the information of the hardware status of the peripheral device currently used by the television is obtained. Once the wake-up command is received, the hardware operating status that are previously saved can be obtained from the memory which maintains its power on and itself in the self-update mode. The hardware can thus be quickly restored to the operating state before standby, thereby increasing the waking-up of the television.

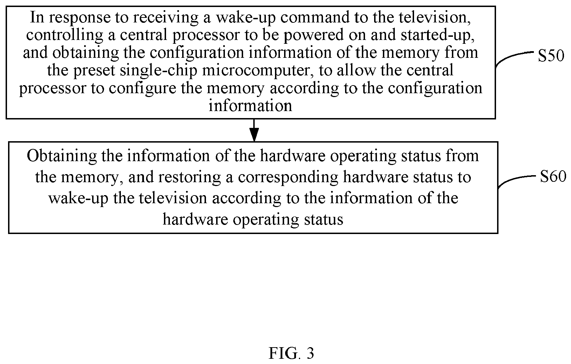

FIG. 3 is referred to, which shows a schematic flowchart of a method of standing-by and starting-up television according to a second embodiment of the present disclosure.

In some of the embodiment, the method of standing-by and starting-up the television includes:
operation S50, in response to receiving a wake-up command to the television, controlling a central processor to be powered on and started-up, and obtaining the configuration information of the memory from the preset single-chip microcomputer, to allow the central processor to configure the memory according to the configuration information.

In an embodiment, as the CPU of the television is powered off during the STR standby state, the CPU cannot directly obtain the information of the hardware operating status from the memory even after the CPU is powered on. The CPU needs at first to obtain the configuration information of the memory from the single-chip microcomputer and configure the memory according to the configuration information. The information of the hardware operating status can thus be obtained from the memory.

Operation S60, obtaining the information of the hardware operating status from the memory, and resuming a corresponding hardware status to wake-up the television according to the information of the hardware operating status.

In an embodiment, there may be several sets of information of the hardware operating status in the memory, and the latest set would be the one which is obtained, that is, it is obtained the information of the hardware operating status stored at the moment the STR standby command is last received.

In an embodiment of the present disclosure, the information of the hardware operating status is obtained from the memory, and the corresponding hardware is restored according to the information of the hardware operating status. The signal source may be restored to the channel before standby, so that the proceeding can be continued. The network would also be restored to the state before standby occurs.

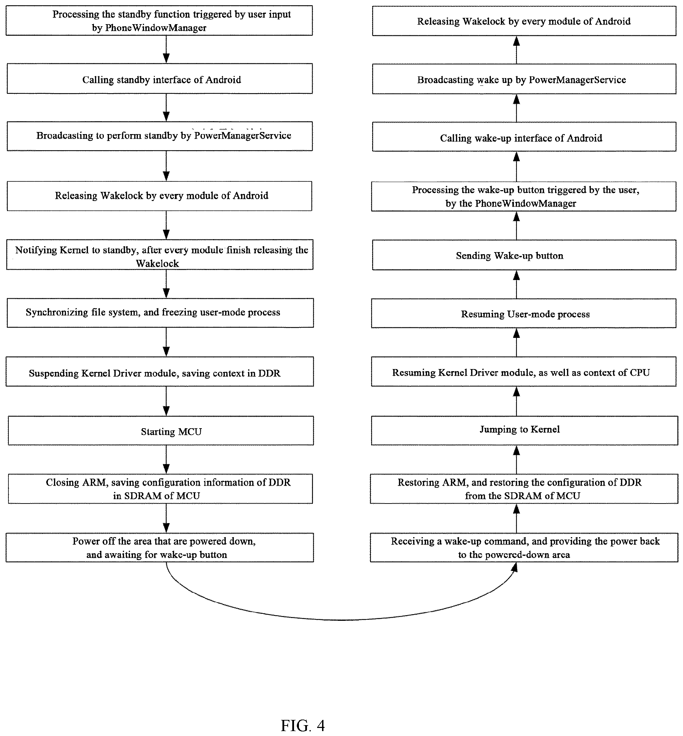

FIG. 4 is referred to, which is a schematic diagram of the overall flowchart of the STR standby and starting-up system according to an embodiment of the present disclosure.

When the user triggers the standby function, the kernel layer returns a corresponding event to the Android Framework layer, the PhoneWindowManager of the Framework layer is entered to process the standby button, and calls the Android standby interface. The PowerManager class is an interface class for upper-layer applications and provides the basic interface (acquisition and release of wake locks) of the Wake Lock mechanism (which is also a sleep wake subsystem). The upper layer application program monitors the system power by calling these interfaces. The PowerManager class communicates with the PowerManagerService class through IBinder, which is a unique communication mode in Android. The interface defined in the PowerManager class is concretely implemented by PowerManagerService. The PowerManagerService class is the core of the WakeLock mechanism in the application framework layer, which performs preliminary analysis and corresponding settings on the parameters passed by the application layer when calling the PowerManager class interface. This class also manages a wake lock queue, and cooperates with other modules. The PowerManagerService sends a broadcast to notify each Android module to release WakeLock. The kernel would be notified after the Android layer WakeLock is completely released. After receiving the notification, kernel synchronizes the file system, freezes the user-mode process, puts each driver module of the kernel into the suspend state, saves the information in memory and closes the module function, and finally the CPU saves the context in memory and starts the MCU. CPU would be power down, and the entire system enters a low-power state. After receiving the wake-up command, the MCU will start the CPU and resume the context, before each drive module and user state process will be restored to the state before standby. The entire system completes the wake-up process. The main role of HiRMService is to store STR standby state, to store and protect some data, to store and process some background state, to control STR standby, as well as to start-up in the standby. Related to MiddleWare ATV resource management, hi_mw_system.cpp provides suspend and resume methods which can be called when the STR is in standby and wake-up. To perform STR standby, deselectSource function is to be called in the suspend function to release the resource, mute the power amplifier and AVOUT, screen backlight, and turn off USB power supply and etc. The resume function is only called when the STR needs to wake-up in the standby state. It is necessary to initialize the audio and PQ modules in the resume function, power amplifier, and release mute for AVOUT, as well as to turn on the screen backlight and USB power supply. The main function of the MCU is to power off the system and enables the system to enter the standby state, take over the input device, and wait for the system to wake up. This code is essential and significantly affects whether the system can be woke up normally in a standby state.

In an embodiment, the television only needs to keep the memory running and the MCU asleep during the STR standby state. The STR standby power consumption is very low. When the wake-up command is received, as the memory configuration information is stored in the MCU, the CPU does not need to initialize the memory after the CPU is powered on. The information of the memory configuration can be directly obtained from the MCU to complete the memory configuration. The information before standby of the hardware operating state can be obtained from the memory can quickly resume the television to the state before standby.

Further, in an embodiment of the method of standing-by and starting-up the television of the present disclosure, operation S50 includes:
in response to receiving the wake-up command, determining whether the television is in the STR standby state;
in response that the television is in the STR standby state, controlling the central processor to be powered on, and obtaining the configuration information of the memory from the preset single-chip microcomputer, to allow the central processor to configure the memory according to the configuration information.

In an embodiment, when the television receives the STR standby command, in order to ensure the stability of the STR standby system, it will decide whether to execute the STR standby step according to the relationship between the current STR standby count and a preset threshold. If the current STR standby count is not greater than the preset threshold, the STR standby step ca be executed, and the television would enter into the STR standby mode. The television would be later woke-up from the STR standby mode when receiving the wake-up command. In an embodiment, as the CPU of the television is powered off during the STR standby state, the CPU cannot directly obtain the information of the hardware operating status from the memory even after the CPU is powered on. The CPU needs at first to obtain the configuration information of the memory from the single-chip microcomputer and configure the memory according to the configuration information. The information of the hardware operating status can thus be obtained from the memory.

In an embodiment, the configuration information of the memory is stored in the single-chip microcomputer. After the CPU is powered on and started, the CPU does not need to initialize the memory, and can directly configure the memory according to the configuration information stored in the MCU, saving the CPU to initialize the memory and further shortens the time for the television to start up from the STR standby state.

Further, in some embodiments of the method of standing-by and starting-up the television of the present disclosure, the operation "in response to receiving the wake-up command, determining whether the television is in the STR standby state", may includes:
in response that the standby state of the television is not the STR standby state, controlling the television to start in a conventional start-up mode.

In an embodiment, when the television receives the STR standby command, in order to ensure the stability of the STR standby system, it will decide whether to execute the STR standby step according to the relationship between the current STR standby count and a preset threshold. If the current STR standby count is greater than the preset threshold, the television would standby in a conventional way. When the wake-up command is received, since the television is in the conventional standby mode, the television would be controlled to start up in the conventional start-up mode. If the STR standby command is received later, operations for the STR standby may be performed. With the embodiment described above, the stability of the STR standby system has been improved.

In addition, the present disclosure further provides a computer-readable storage medium that stores a program for standing-by and starting-up the television on the computer-readable storage medium, and when the program is executed by a processor, the method of standing-by and starting-up of the television described above would be implemented.

The specific embodiments of the computer-readable storage medium of the present disclosure are basically the same as the aforementioned embodiments regarding the method of standing-by and starting-up of the television, which will not be repeated herein.

It should be noted that in this document, the terms "comprising" "including" or any other variation thereof are intended to cover a non-exclusive inclusion, such that a process, method, article, or system that includes a list of elements includes not only those elements but also other elements not expressly listed, or elements inherent to such process, method, article, or system. Without further restrictions, an element defined by the statement " includes an" does not exclude the presence of another identical element in a process, method, article, or system including the element.

The aforementioned serial numbers regarding the embodiments of the present application are for description only and do not represent the superiority and inferiority of the embodiments.

From the above description of the embodiments, those skilled in the art can clearly understand that the method of the above embodiments can be implemented by means of software plus necessary general-purpose hardware platforms. Of course, it can also be implemented by means of hardware, but in many cases the former is a better embodiment. Based on this understanding, the technical solution of the present application can be embodied in the form of a software product, which is stored in a storage medium (such as ROM/RAM, magnetic disk, optical disk) as described above, and includes several instructions to cause a terminal device (which can be a mobile phone, a computer, a server, an air conditioner, or a network device, etc.) to perform the methods described in various embodiments of the present application.

The above is only the preferred embodiment of the present application and is not therefore limiting the scope of the present application. Any equivalent structure or process change made by using the contents of the present specification and drawings, or directly or indirectly applied in other related technical fields, shall be included in the protection scope of the present application

## Claims

1. A method of standing-by and starting-up a television, **characterized in that**, the method comprises:
in response to receiving a STR standby command, obtaining information of a hardware operating status of the television, and obtaining configuration information of a memory, wherein the memory is preset in a self-update mode;
storing the information of the hardware operating status of the television in the memory, and storing the configuration information of the memory in a preset single-chip microcomputer;
releasing hardware resource being used by the television and freezing a current process; and
controlling to power-off of hardware except the memory and the single-chip microcomputer, and allowing the television to enter a STR standby state.

2. The method as claimed in claim 1, wherein the operation of "in response to receiving a STR standby command, obtaining information of a hardware operating status of the television, and obtaining configuration information of a memory", include:
in response to receiving the STR standby command, obtaining a current STR standby count by adding one count onto a variable corresponding to a historical STR standby count;
determining whether the current STR standby count is greater than a preset threshold; and
in response that the current STR standby count fails to be greater than the preset threshold, obtaining the information of the hardware operating status of the television, and obtaining the configuration information of the memory preset in the self-update mode.

3. The method as claimed in claim 2, wherein after the operation "determining whether the current STR standby count is greater than a preset threshold", the method comprises:
in response that the current STR standby count is greater than the preset threshold, setting the current STR standby count to zero;
clearing historical information of the hardware operating status stored in the memory; and
controlling the television to enter into a conventional standby mode.

4. The method as claimed in claim 1, wherein the method comprises:
in response to receiving a wake-up command to the television, controlling a central processor to be powered on and started-up, and obtaining the configuration information of the memory from the preset single-chip microcomputer, to allow the central processor to configure the memory according to the configuration information; and
obtaining the information of the hardware operating status from the memory, and resuming a corresponding hardware status to wake-up the television according to the information of the hardware operating status.

5. The method as claimed in claim 4, wherein the operation of "in response to receiving a command of waking-up the television, controlling a central processor to be powered on and started-up, and obtaining the configuration information of the memory from the preset single-chip microcomputer, to allow the central processor to configure the memory according to the configuration information", comprises:
in response to receiving the wake-up command, determining whether the television is in the STR standby state; and
in response that the television is in the STR standby state, controlling the central processor to be powered on, and obtaining the configuration information of the memory from the preset single-chip microcomputer, to allow the central processor to configure the memory according to the configuration information.

6. A television, **characterized in that**, the television comprises: a processor, and a memory storing one or more programs for standing-by and starting-up the television, wherein the one or more programs comprises instructions that, when executed by the processor, cause the television to :
in response to receiving a STR standby command, obtain information of a hardware operating status of the television, and obtain configuration information of a memory, wherein the memory is preset in a self-update mode;
store the information of the hardware operating status of the television in the memory, and store the configuration information of the memory in a preset single-chip microcomputer;
release hardware resource being used by the television and freeze a current process; and
control to power-off of hardware except the memory and the single-chip microcomputer, and allow the television to enter a STR standby state.

7. The television as claimed in claim 6, wherein the one or more programs comprises operations that, when executed by the processor, cause the television to:
in response to receiving the STR standby command, obtain a current STR standby count by adding one count to a variable corresponding to a historical STR standby count;
determine whether the current STR standby count is greater than a preset threshold; and
in response that the current STR standby count fails to be greater than the preset threshold, obtain the information of the hardware operating status of the television, and obtain the configuration information of the memory preset in the self-update mode.

8. The television as claimed in claim 6, wherein the one or more programs comprises operations that, when executed by the processor, cause the television to:
in response that the current STR standby count is greater than the preset threshold, set the current STR standby count to zero;
clear historical information of the hardware operating status stored in the memory; and
control the television to enter into a conventional standby mode.

9. The television as claimed in claim 6, wherein the one or more programs comprises operations that, when executed by the processor, cause the television to:
in response to receiving a wake-up command to the television, control a central processor to be powered on and started-up, and obtain the configuration information of the memory from the preset single-chip microcomputer, to allow the central processor to configure the memory according to the configuration information; and
obtain the information of the hardware operating status from the memory, and resume a corresponding hardware status to wake-up the television according to the information of the hardware operating status.

10. The television as claimed in claim 6, wherein the one or more programs comprises operations that, when executed by the processor, cause the television to:
in response to receiving the wake-up command, determine whether the television is in the STR standby state; and
in response that the television is in the STR standby state, control the central processor to be powered on, and obtain the configuration information of the memory from the preset single-chip microcomputer, to allow the central processor to configure the memory according to the configuration information.

11. A computer-readable storage medium, **characterized in that**, the computer-readable storage medium stores one or more programs for standing-by and starting-up a television, wherein the one or more programs comprises operations that, when executed by a processor, cause the computer-readable storage medium to:
in response to receiving a STR standby command, obtain information of a hardware operating status of the television, and obtain configuration information of a memory, wherein the memory is preset in a self-update mode;
store the information of the hardware operating status of the television in the memory, and store the configuration information of the memory in a preset single-chip microcomputer;
release hardware resource being used by the television and freeze a current process; and
control to power-off of hardware except the memory and the single-chip microcomputer, and allow the television to enter a STR standby state.

12. The computer-readable storage medium as claimed in claim 11, wherein the one or more programs comprises operations that, when executed by the processor, cause the television to:
in response to receiving the STR standby command, obtain a current STR standby count by adding one count onto a variable corresponding to a historical STR standby count;
determine whether the current STR standby count is greater than a preset threshold; and
in response that the current STR standby count fails to be greater than the preset threshold, obtain the information of the hardware operating status of the television, and obtain the configuration information of the memory preset in the self-update mode.

13. The computer-readable storage medium of claim 11, wherein the one or more programs comprises operations that, when executed by the processor, cause the television to:
in response that the current STR standby count is greater than the preset threshold, set the current STR standby count to zero;
clear historical information of the hardware operating status stored in the memory; and
control the television to enter into a conventional standby mode.

14. The computer-readable storage medium of claim 11, wherein the one or more programs comprises operations that, when executed by the processor, cause the television to:
in response to receiving a wake-up command to the television, control a central processor to be powered on and started-up, and obtain the configuration information of the memory from the preset single-chip microcomputer, to allow the central processor to configure the memory according to the configuration information; and
obtaining the information of the hardware operating status from the memory, and resuming a corresponding hardware status to wake-up the television according to the information of the hardware operating status.

15. The computer-readable storage medium of claim 11, wherein the one or more programs comprises operations that, when executed by the processor, cause the television to:
in response to receiving the wake-up command, determining whether the television is in the STR standby state; and
in response that the television is in the STR standby state, control the central processor to be powered on, and obtain the configuration information of the memory from the preset single-chip microcomputer, to allow the central processor to configure the memory according to the configuration information.
